# EUROPÄISCHE PATENTSCHRIFT

(11) **EP 4 520 626 B1**
(45) Veröffentlichungstag und Bekanntmachung des Hinweises auf die Patenterteilung: **14.10.2026**
(21) Anmeldenummer: 23195863.8
(22) Anmeldetag: 07.09.2023
(51) Int. Cl.: B62B 3/00

(54) **ROLLBEHÄLTER**
ROLL CONTAINER
CONTENEUR ROULANT

(43) Veröffentlichungstag der Anmeldung: 12.03.2025
(73) Patentinhaber: FEIL rolltainer GmbH, 59602 Rüthen (DE)
(72) Erfinder: Oel, Christian, 59602 Rüthen (DE)
(74) Vertreter: Andrejewski - Honke Patent- und Rechtsanwälte Partnerschaft mbB

(56) Entgegenhaltungen:
- DE-A1- 102007 033 147
- DE-A1- 2 937 420
- GB-A- 1 231 841
- GB-A- 1 253 029
- US-A- 3 628 805

## Beschreibung

Die Erfindung betrifft einen Rollbehälter, insbesondere Rollcontainer, mit einer auf Rollen gelagerten Basis, und mit einem in Transportposition auf der Basis angeordneten und an diese lösbar angeschlossenen Gitterwandgestell aus zumindest zwei sich gegenüberliegenden Seitenwänden, wobei die jeweilige Seitenwand mithilfe zumindest eines fußseitigen, drehbar angelenkten Riegelelementes lösbar an die Basis angeschlossen ist.

Rollbehälter werden in der Praxis oftmals zum Transport von beispielsweise Nahrungsmitteln eingesetzt. Die Nahrungsmittel sind dabei in Kleingebinden verpackt, sodass ein einwandfreier Transport gelingt. Das gilt sowohl im Innern von Logistikzentren als auch ausgehend hiervon im Zusammenhang mit der Beladung von LKWs und schließlich für die Verteilung bei einzelnen Einkaufsmärkten und in deren Innern. Dabei lassen sich die einzelnen Rollbehälter vom Bedienpersonal einfach hin und her rollen. Zu diesem Zweck kommen meistens zwei feste Rollen und zwei drehbare Rollen an der Basis zum Einsatz. Es kann aber auch mit vier drehbaren Rollen an der Basis gearbeitet werden.

Solche Rollbehälter haben sich grundsätzlich bewährt, weil sie den Transport und damit den Warenumschlag erleichtern. Außerdem sind derartige Rollbehälter preisgünstig, lassen sich im Allgemeinen leicht reinigen und sind darüber hinaus für einen geschlossenen Kreislauf der Art geeignet, dass die entladenen Rollbehälter beispielsweise vom Verkaufsmarkt zurück zum Logistikzentrum verbracht werden können. Dazu werden in der Praxis verschiedene Ansätze verfolgt.

Tatsächlich werden die Rollbehälter oftmals über Kopf für den Leertransport ineinandergesteckt. Dadurch können gleichsam zwei Rollbehälter so gestapelt werden, dass sie nur den Platz eines Rollbehälters einnehmen.

Zunehmend ergeben sich hier allerdings Probleme derart, dass in den Logistikzentren der zur Verfügung stehende Lagerplatz für die Rollbehälter einerseits begrenzt ist und andererseits die Anzahl der Rollbehälter aufgrund der hiermit transportierten Waren ansteigt. Aus diesem Grund werden die Rollbehälter in der Praxis und im Stand der Technik nach der EP 3 015 340 B1 zerlegbar ausgebildet.

Zu diesem Zweck ist im Rahmen der Lehre nach der EP 3 015 340 B1 ein Riegelmechanismus vorgesehen, der in einer Offenstellung das Einstecken der Seitenwand in eine Ausnehmung der Basis ermöglicht. In einer Geschlossenstellung kann die entlang einer Bewegungsbahn in die Ausnehmung eingesteckte Seitenwand gegenüber der Basis verankert werden. Bei dem Riegelmechanismus handelt es sich im konkret beschriebenen Fall um eine um eine Drehachse drehbare Drehfalle, wobei der Riegelmechanismus durch Drehung der Drehfalle um die Drehachse zwischen der Offenstellung und der Geschlossenstellung überführt werden kann. Die Gewichtskraft der Seitenwand wirkt dabei verriegelnd auf die Drehfalle. Die Drehfalle bzw. der Riegelmechanismus ist dabei an die Basis drehbar angeschlossen.

Die bekannte Vorgehensweise nach der EP 3 015 340 B1 hat sich grundsätzlich bewährt, wenn es um eine sichere Verriegelung der Seitenwände gegenüber der Basis geht und zugleich die Lösbarkeit der Seitenwände gegenüber der Basis zum Zwecke des Transportes des Rollbehälters in seiner Lagerposition gewährleistet werden soll. Allerdings ist die bekannte Lösung technologisch aufwendig und dementsprechend kostenträchtig. Hinzu kommt, dass die Basis mit den zum Einstecken der Seitenwände vorgesehenen Ausnehmungen ausgerüstet werden muss. In Verbindung mit dem speziellen Riegelmechanismus führt dies zu einer Lösung, die mit bisher am Markt befindlichen Rollbehältern nicht kompatibel ist.

Tatsächlich zeichnen sich solche seit langem und vielfältig in der Praxis eingesetzten gattungsgemäßen Rollbehälter nach der DE 29 37 420 A1 dadurch aus, dass eine einfache Verriegelung realisiert ist, die oftmals als sogenannter Fallbügel bezeichnet wird. Mithilfe des bekannten Riegelelementes kann die betreffende Seitenwand an der Basis festgehalten werden, auch wenn der Rollbehälter umgedreht wird, um im leeren Zustand transportiert zu werden. Das hierzu vorgesehene Riegelelement rastet in diesem Zusammenhang automatisch oder durch Beaufschlagung seitens des Bedieners (mit dem Fuß) ein und die Freigabe kann ebenfalls durch eine Bedienperson mithilfe des Fußes herbeigeführt werden.

Zu diesem Zweck handelt es sich bei dem Riegelelement nach der DE 29 37 420 A1 um eine Klammer bzw. einen Bügel, der um eine horizontale Achse schwenkbar an der Seitenwand gelagert ist. Das Ende des Bügels ist dabei umgebogen, sodass hierdurch die Basis in der Transportposition untergriffen wird. D. h., im Gegensatz zu der Lehre nach der EP 3 015 340 stellt das Riegelelement erfindungs- und gattungsgemäß einen Bestandteil der Seitenwand dar. Demgegenüber ist bei der EP 3 015 340 B1 das Riegelelement als Bestandteil der Basis ausgebildet.

D. h., die Transportposition korrespondiert dazu, dass die das Gitterwandgestell definierenden und sich gegenüberliegenden Seitenwände an die Basis angeschlossen sind und auf der Basis (senkrecht sowie randseitig) aufstehen. Auf diese Weise kann im Innern des Gitterwandgestelles bzw. zwischen den sich gegenüberliegenden Seitenwänden der dort vorhandene Raum für die einleitend bereits beschriebenen Gegenstände, insbesondere Gebinde von Nahrungsmitteln zum Transport genutzt werden. Demgegenüber gehört die sogenannte und im gattungsbildenden Stand der Technik nach der DE 29 37 420 A1 diskutierte Lagerposition dazu, dass der Rollbehälter in leerem Zustand gelagert und/oder zurück zur Wiederbefüllung transportiert wird.

Weitere Rollbehälter mit Seitenwänden sind in der DE 10 2007 033 147 A1, in der GB 1 253 029 A und in der GB 1 231 841 A offenbart.

Wie zuvor bereits erläutert, wird die Lagerposition bisher so eingenommen, dass ein Rollbehälter über Kopf in den anderen Rollbehälter eingesteckt wird, um im jeweils leeren Zustand transportiert werden zu können. Dadurch nehmen zwar zwei leere Rollbehälter den Platz eines Rollbehälters ein. Allerdings erfordern die aktuellen Platzprobleme eine weitere Reduzierung des Volumens in der Lagerposition. An dieser Stelle gibt es bisher keine geeigneten Lösungen, die zudem mit auf dem Markt befindlichen Rollbehältern kompatibel sind, wie sie beispielsweise in der DE 29 37 420 A1 beschrieben werden. Hier setzt die Erfindung an.

Der Erfindung liegt das technische Problem zugrunde, einen derartigen Rollbehälter so weiterzuentwickeln, dass sein Volumen insbesondere in der Lagerposition gegenüber den bisherigen Vorgehensweisen reduziert ist. Außerdem soll eine entsprechende Kombination aus dem fraglichen Rollbehälter in seiner Transportposition und wenigstens einem weiteren Rollbehälter in zugehöriger Lagerposition zur Verfügung gestellt werden.

Zur Lösung dieser technischen Problemstellung ist ein gattungsgemäßer (und in Transportposition befindlicher) Rollbehälter und insbesondere Rollcontainer im Rahmen der Erfindung dadurch gekennzeichnet, dass die Basis mit zumindest einer mittigen Aussparung zur Aufnahme des jeweiligen Riegelelementes einer oder mehrerer im Innern des Gitterwandgestelles sowie auf der Basis in ihrer Lagerposition abgestellten Seitenwänden ausgebildet ist.

Die Erfindung greift also zunächst einmal auf eine speziell ausgebildete Basis zurück, die nämlich mit zumindest einer mittigen Aussparung ausgerüstet ist. Eine solche Aussparung lässt sich unschwer in die Basis einbringen, weil es sich bei der Basis im Allgemeinen um ein Kunststoffspritzgussteil handelt. Die Aussparung erfordert also lediglich eine entsprechende Anpassung der Spritzgussform. Eine zusätzliche drehbare Lagerung des Riegelelementes wie bei der EP 3 015 340 B1 ist entbehrlich, weil erfindungsgemäß das Riegelelement an der Seitenwand drehbar gelagert ist. Dabei wird meistens so vorgegangen, dass die Aussparung in der Basis als Rechteckaussparung ausgebildet ist. Außerdem verläuft die fragliche Rechteckaussparung meistens quer zur Längserstreckung der an die Basis angeschlossenen und auf dieser senkrecht aufstehenden Seitenwände in der Transportposition des Rollbehälters.

Diese Aussparung ermöglicht die Aufnahme wenigstens einer auf der Basis in der Lagerposition abgestellten Seitenwand. Außerdem wird die Seitenwand im Innern des Gitterwandgestelles aufgenommen, d. h. befindet sich in der fraglichen Lagerposition zwischen den beiden das Gitterwandgestell definierenden und an die Basis angeschlossenen Seitenwänden. Bei den in der Lagerposition auf der Basis und im Innern des Gitterwandgestells abgestellten Seitenwänden handelt es sich um solche, die von weiteren Rollbehältern resultieren, die zu diesem Zweck zerlegt worden sind und ihre Lagerposition einnehmen.

D. h., mithilfe des erfindungsgemäßen Rollbehälters in seiner Transportposition können wenigstens zwei weitere, in der Regel drei weitere und meistens sogar vier weitere zerlegte Rollbehälter im Innern des Gitterwandgestelles und auf der Basis in ihrer Lagerposition transportiert werden. Die Lagerposition (dieser zu transportierenden oder transportierten Rollbehälter) korrespondiert dazu, dass der für den Transport vorgesehene Rollbehälter seine Transportposition einnimmt, also die das Gitterwandgestell definierenden Seitenwände an die Basis angeschlossen sind und senkrecht sowie randseitig auf dieser aufstehen. Demgegenüber nehmen die mithilfe des Rollbehälters in der Transportposition transportierten weiteren Rollbehälter ihre Lagerposition ein, sind also zerlegt. Die Zerlegung erfolgt dergestalt, dass die Seitenwände mithilfe des Riegelelementes von der Basis gelöst werden und folglich die Seitenwände und die Basis als jeweilige Einzelbestandteile zur Verfügung stehen und dann mithilfe des in der Transportposition befindlichen Rollbehälters in leerem Zustand transportiert werden können.

Da auf diese Weise erfindungsgemäß wenigstens zwei und in der Regel sogar bis zu vier Rollbehälter in ihrer Lagerposition in zerlegtem Zustand im Innern des Gitterwandgestells des in Transportposition befindlichen Rollbehälters aufgenommen werden können, wird im Vergleich zum Stand der Technik eine wenigstens doppelt so hohe Belegung der für die Rollbehälter im Leerzustand zur Verfügung stehenden Fläche ermöglicht. Oder umgekehrt, kann die Lagerfläche für die leeren Rollbehälter im Vergleich zum Stand der Technik halbiert oder sogar noch weiter verringert werden. Denn erfindungsgemäß nehmen nunmehr insgesamt fünf Rollbehälter den Platz eines Rollbehälters ein, nämlich der eine Rollbehälter in Transportposition und die vier zerlegten Rollbehälter in Lagerposition in seinem Innern, wohingegen bisher lediglich zwei umgedreht transportierte Rollbehälter entsprechend dem Stand der Technik nach der DE 29 37 420 A1 vorgesehen waren. Hierin ist ein wesentlicher Vorteil zu sehen.

Ein weiterer Vorteil ergibt sich dadurch, dass keine speziell ausgelegten Riegelelemente wie nach der EP 3 015 340 B1 an der Basis erforderlich sind und dementsprechend auch die in diesem Zusammenhang obligatorischen und die Seitenwände aufnehmenden Ausnehmungen in der Basis entfallen können. Vielmehr werden die Seitenwände bei dem erfindungsgemäßen Rollbehälter auf den demgegenüber flachen Boden respektive die Basis aufgestellt und sind komplizierte Riegelmechanismen ausdrücklich nicht erforderlich. Dabei arbeitet die Erfindung mit dem fußseitig lediglich drehbar angebrachten einfach aufgebauten Riegelelement.

Tatsächlich ist das Riegelelement im Allgemeinen an eine untere Querstange der Seitenwand drehbar angeschlossen. Das Riegelelement stellt also einen meistens unverlierbaren Bestandteil der Seitenwand dar. Dabei ist das Riegelelement meistens als Lasche mit Gelenköse ausgebildet. Außerdem ist die Auslegung ferner so getroffen, dass das Riegelelement die Basis in der Transportposition des Rollbehälters zumindest teilweise untergreift. Dadurch wird die Seitenwand einerseits gegenüber der Basis fixiert und ist andererseits sichergestellt, dass die Seitenwand senkrecht und randseitig auf der Basis aufsteht. Hierzu trägt ergänzend bei, dass die betreffende Seitenwand mit ihren jeweiligen Eckpfosten in den Aufnahmen und insbesondere Steckaufnahmen der Basis aufgenommen wird. Meistens sind die Steckaufnahmen in den jeweiligen Ecken der Basis vorgesehen.

Das Riegelelement kann dabei zusätzlich mit einem Betätigungsausleger ausgerüstet sein. Außerdem kann das Riegelelement insgesamt so ausgestaltet sein und arbeiten, wie dies in dem gattungsbildenden Stand der Technik nach der DE 29 37 420 A1 im Detail beschrieben wird. D. h., der erfindungsgemäße Rollbehälter kann grundsätzlich mit seit langem auf dem Markt befindlichen Seitenwänden kombiniert werden. Da die Seitenwände mit den fußseitig drehbar angelenkten Riegelelementen ausgerüstet sind und ansonsten keine weiteren Besonderheiten zur Verriegelung aufweisen, lassen sich auf diese Weise auch bereits auf dem Markt befindliche Rollbehälter in ihre Lagerposition überführen und dann mit dem erfindungsgemäßen Rollbehälter in seiner Transportposition bevorraten und transportieren.

Hierfür sorgt im Wesentlichen die Aussparung in der Basis, weil mit ihrer Hilfe die im Allgemeinen mittig und fußseitig drehbar angelenkten Riegelelemente in der betreffenden Aussparung aufgenommen werden können. D. h., der Transport der zerlegten und herkömmlichen Rollbehälter in ihrer Lagerposition ist hierdurch grundsätzlich möglich. Dadurch sind aufwendige Umrüstungen nicht erforderlich und können die erfindungsgemäßen Rollbehälter unschwer mit bereits vorhandenen Rollbehältern kombiniert werden bzw. lassen sich die vorhandenen Rollbehälter in zerlegtem Zustand in ihrer Lagerposition mithilfe des erfindungsgemäßen Rollbehälters problemlos transportieren. Das ist beim Stand der Technik nach der EP 3 015 340 B1 aufgrund des speziellen Verriegelungsmechanismus nicht möglich. Hierin sind die wesentlichen Vorteile zu sehen.

Es hat sich bewährt, dass die Basis als Kunststoffboden mit gegebenenfalls zumindest einer eingelegten Verstärkungsschiene ausgebildet ist. Außerdem ist die Basis in der Regel mit einer oder mehreren Aufnahmen bzw. Steckaufnahmen zur Aufnahme der auf der Basis abgestellten Seitenwände ausgerüstet. D. h., die für ihren Transport auf der Basis abgestellten Seitenwände lassen sich auf oder in die Basis einstecken. Eine zusätzliche Verriegelung mit Hilfe der Riegelelemente erfolgt in der Lagerposition nicht. Denn die Riegelelemente hängen an der Seitenwand und tauchen in die Aussparung ein.

Das ist selbstverständlich nur als Option zu verstehen. Denn genauso gut können die Seitenwände nicht mit ihren Eckpfosten voran auf der Basis abgestellt werden, sondern vielmehr kopfseitig voran in umgedrehter Konstellation. Für die Sicherung der solchermaßen auf der Basis abgestellten Seitenwände sorgen dann ein oder mehrere an wenigstens eine Seitenwand angeschlossene Spannmittel, mit deren Hilfe die eine respektive die beiden Öffnungen zwischen den sich gegenüberliegenden Seitenwänden verschlossen werden. Neben den Seitenwänden können im Innern des Gitterwandgestells und auf der Basis grundsätzlich auch mehrere Basen der in der Lagerposition befindlichen bzw. zerlegten Rollbehälter aufgenommen werden.

Dabei wird weiter so vorgegangen, dass die eine oder die mehreren Aufnahmen in der Basis sich gegenüberliegend an der Basis vorgesehen sind und als Steckaufnahmen für Eckpfosten der Seitenwände fungieren. In diesem Zusammenhang wird meistens so vorgegangen, dass jeweils mittig der Basis Aufnahmen zur aneinander liegenden Steckaufnahme zweier Seitenwände in ihrer Lagerposition vorgesehen sind. Beidseitig der auf diese Weise mittig der Basis vorgesehenen Seitenwände können nun weitere Seitenwände und/oder Basen der zerlegten Rollbehälter platziert werden. Das eine oder die mehreren Spannmittel sorgen in diesem Zusammenhang dafür, dass die zerlegten Rollbehälter im Innern des Gitterwandgestells aufgenommen und zurückgehalten werden.

Gegenstand der Erfindung ist auch eine Kombination aus dem zuvor beschriebenen Rollbehälter und wenigstens einer in Lagerposition im Innern des Gitterwandgestells sowie auf der Basis abgestellten Seitenwand. Meistens nimmt das Gitterwandgestell in seinem Innern und auf der Basis insgesamt acht Seitenwände von vier zerlegten Rollbehältern auf, und zwar in der Regel in Verbindung mit den zugehörigen vier Basen der betreffenden zerlegten Rollbehälter. Dadurch erklärt sich, dass der erfindungsgemäße Rollbehälter insgesamt in der Lage ist, in seinem Innern vier zerlegte Rollbehälter aufzunehmen, sodass der Platz eines Rollbehälters von insgesamt fünf Rollbehältern, und zwar vier in ihrer Lagerposition und ein Rollbehälter in Transportposition, eingenommen wird. Dabei lassen sich ausgehend von wenigstens einer vorzugsweise mittig in die Basis eingesteckten Seitenwand beidseitig auf der Basis abgestellte Seitenwände und gegebenenfalls Basen im Innern des Gitterwandgestells vorsehen und auf diese Weise transportieren. Meistens sind zwei aneinander liegende Seitenwände mittig der Basis vorgesehen, von denen ausgehend beidseitig die auf der Basis abgestellten Seitenwände und gegebenenfalls Basen im Innern des Gitterwandgestells platziert werden.

Dabei wird schließlich auch noch so vorgegangen, dass die auf der Basis abgestellten Seitenwände parallel zu den das Gitterwandgestell definierenden Seitenwänden ausgerichtet sind. Gleiches gilt für die auf der Basis abgestellten mehreren Basen der zerlegten Rollbehälter. Auf diese Weise wird eine besonders hohe Packungsdichte im Innern des Gitterwandgestells erreicht und können im Maximum in der Regel die vier in ihrer Lagerposition zerlegten Rollbehälter im Innern des Gitterwandgestells und auf der Basis des erfindungsgemäßen Rollbehälters in seiner Transportposition aufgenommen und gelagert und/oder in leerem Zustand beispielsweise in ein Logistikzentrum zurücktransportiert werden. Als weiterer Vorteil fällt auf, dass die in ihrer Lagerposition zerlegten Rollbehälter im Innern des in Transportposition befindlichen Rollbehälters über eine größtenteils gewichtsmäßig gleichmäßige Verteilung verfügen. D. h., der erfindungsgemäße Rollbehälter neigt selbst in beladenem Zustand mit den zerlegten Rollbehältern in ihrer Lagerposition nicht zu einem etwaigen Kippen. Das war bisher in der Praxis ein ständiges Problem. Außerdem sorgt die Aussparung in der Basis dafür, dass die in der Lagerposition befindlichen Seitenwände mit ihren Verriegelungselementen respektive Fallbügeln sich nicht im Innern des Gitterwandgestells verhaken können. Vielmehr sorgt die Aussparung bzw. Rechteckaussparung für die Aufnahme der Verriegelungselemente bzw. Riegelelemente. Schließlich sorgt die gleichmäßige Verteilung ausgehend von der Mitte im Innern des Gitterwandgestells dafür, dass die einzelnen im Innern des Gitterwandgestells aufgenommenen Seitenwände einwandfrei und problemlos entnommen werden können und darüber hinaus eine einwandfreie Organisation im Hinblick auf die zerlegten und in ihrer Lagerposition befindlichen Rollcontainer gelingt. Hierin sind die wesentlichen Vorteile zu sehen.

Nachfolgend wird die Erfindung anhand einer lediglich ein Ausführungsbeispiel darstellenden Zeichnung näher erläutert; es zeigen:
- Fig. 1: den erfindungsgemäßen Rollbehälter bzw. die erfindungsgemäße Kombination aus einem Rollbehälter und wenigstens einer in Lagerposition im Innern des Gitterwandgestells sowie auf der Basis abgestellten Seitenwand in einer Perspektive,
- Fig. 2: den Gegenstand nach der Fig. 1 in einer Seitenansicht aus Richtung X,
- Fig. 3: den Gegenstand nach der Fig. 1 in einer Seitenansicht aus der Richtung Y,
- Fig. 4: eine Aufsicht von oben auf den Gegenstand nach Fig. 1 und
- Fig. 5: den Boden in einer Detailansicht.

In den Figuren ist ein Rollbehälter und insbesondere Rollcontainer dargestellt. Dieser verfügt zunächst einmal über eine auf Rollen 1 gelagerte Basis 2. Bei den Rollen 1 kann es sich einerseits um zwei Bockrollen, also feststehende Rollen, und andererseits zwei drehbare Rollen 1 handeln. Grundsätzlich sind auch insgesamt vier drehbare Rollen 1 denkbar und werden von der Erfindung umfasst.

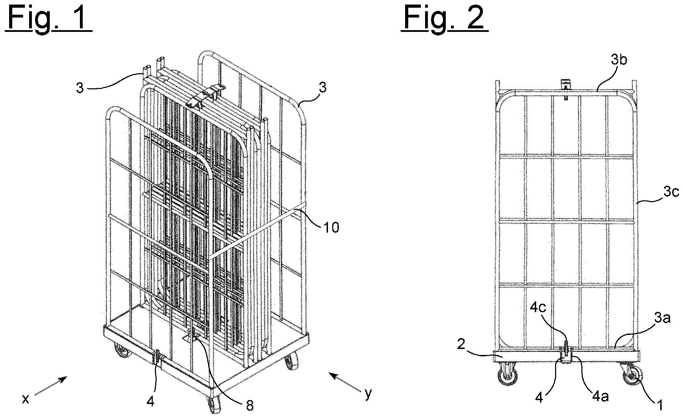

Auf der Basis 2 ist ein Gitterwandgestell 3 angeordnet und an die Basis 2 lösbar angeschlossen. Das Gitterwandgestell 3 setzt sich nach dem Ausführungsbeispiel aus wenigstens zwei sich gegenüberliegenden Seitenwänden 3 zusammen. Außerdem sind die Seitenwände bzw. das Gitterwandgestell 3 lösbar an die Basis 2 angeschlossen und stehen in der auf diese Weise realisierten und in der Fig. 1 wiedergegebenen Transportposition senkrecht auf der Basis 2 sowie randseitig auf. In der Lagerposition des Rollbehälters sind die Seitenwände 3 von der Basis 2 gelöst und der Rollenbehälter dementsprechend zerlegt.

Damit die beiden gegenüberliegenden Seitenwände 3 sich nicht von der Basis 2 lösen können, ist die jeweilige Seitenwand 3 mithilfe zumindest eines fußseitigen und drehbar angelenkten Riegelelementes 4 lösbar an die Basis 2 angeschlossen. Tatsächlich ist das Riegelelement 4 nach dem Ausführungsbeispiel und nicht einschränkend an eine untere Querstange 3a der Seitenwand 3 drehbar angeschlossen. Grundsätzlich können auch mehrere Riegelelemente 4 vorgesehen sein. Dazu handelt es sich bei dem Riegelelement 4 nach dem Ausführungsbeispiel um eine Lasche, die mit einer Gelenköse die untere Querstange 3a der betreffenden Seitenwand 3 umgreift. Die Seitenwand 3 verfügt darüber hinaus noch über eine obere Querstange 3b und zwei seitliche Querstangen 3c, sodass sich insgesamt die in den Figuren dargestellte rechteckige Grundfläche der betreffenden Seitenwand 3 erklärt. Die beiden seitlichen Querstangen 3c sind zudem als jeweils Eckpfosten 3c der Seitenwände 3 ausgebildet. Mithilfe der Eckpfosten 3c wird die betreffende Seitenwand 3 auf der Basis 2 aufgenommen.

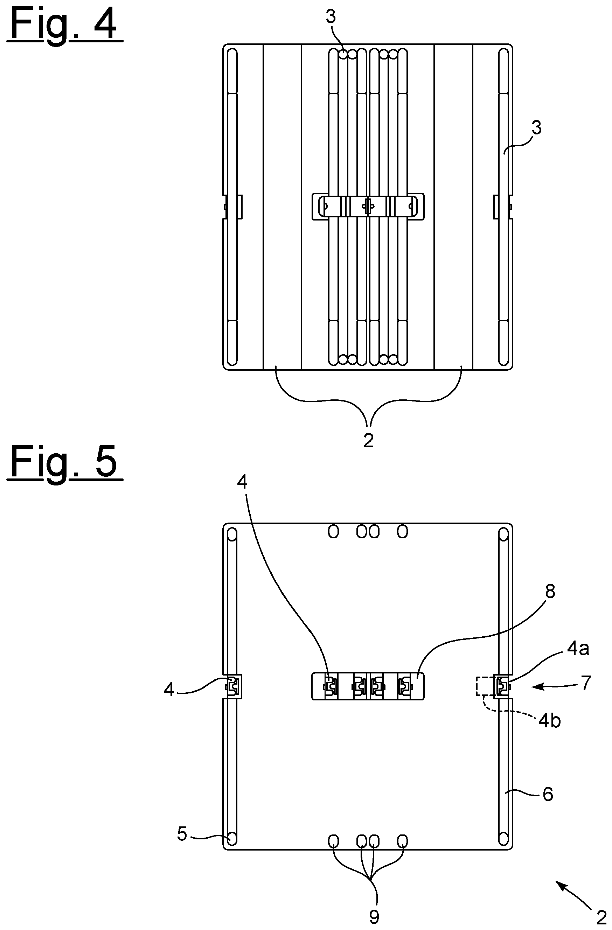

Tatsächlich erkennt man in der Aufsicht auf die Basis 2 in der Fig. 5 zu diesem Zweck jeweils Steckaufnahmen 5 für die fraglichen Eckpfosten 3c der Seitenwände 3. Die Steckaufnahmen 5 in der Basis 2 finden sich dabei jeweils in einer Ecke der nach dem Ausführungsbeispiel rechteckigen bzw. quadratischen Basis 2.

Außerdem ist eine die jeweiligen Steckaufnahmen 5 miteinander verbindende und im Querschnitt bogenförmige Ausnehmung 6 in der Basis 2 vorgesehen, in welcher die untere Querstange 3a mit dem hieran drehbar angelenkten Riegelelement 4 in der Transportposition entsprechend der Darstellung in der Fig. 1 aufgenommen wird. Eine zusätzliche Aussparung 7 sorgt dafür, dass das nach dem Ausführungsbeispiel eine Riegelelement 4 in der Transportposition nach der Fig. 1 die Basis 2 lösbar untergreifen kann. Dadurch wird die Seitenwand 3 gegenüber der Basis 2 in der Transportposition lösbar verriegelt.

Dazu handelt es sich bei dem Riegelelement 4 um die bereits angesprochene Lasche mit der Gelenköse. Tatsächlich ist die Lasche nach dem Ausführungsbeispiel im Wesentlichen und in Seitenansicht überwiegend rechteckförmig gestaltet mit einem größtenteils vertikal verlaufenden Schenkel 4a, welcher randseitig der Basis 2 verläuft und einem überwiegend horizontal ausgerichteten Schenkel 4b, welcher die Basis 2 untergreift. Außerdem ist das Riegelelement 4 nach dem Ausführungsbeispiel noch mit einem Betätigungsausleger 4c ausgerüstet. Über den Betätigungsausleger 4c kann das Riegelelement 4 von seinem in der Seitenansicht nach der Fig. 2 dargestellten verriegelten Zustand weggeschwenkt werden. Dazu ist es lediglich erforderlich, dass eine Bedienperson den Betätigungsausleger 4c mit einem Fuß beaufschlagt, sodass als Folge hiervon das Riegelelement 4 um die untere Querstange 3a der Seitenwand 3 verschwenkt und sich hierdurch der horizontale Schenkel 4b von der Basis 2 löst und auch lösen kann. Die Anbringung und Verriegelung des Riegelelementes 4 erfolgt dann dadurch, dass die fragliche Bedienperson den vertikalen Schenkel 4a beispielsweise mit dem Fuß beaufschlagt.

Bei der Basis 2 handelt es sich im Ausführungsbeispiel um eine Platte aus Kunststoff, die als Kunststoffspritzgussteil ausgebildet und rechteckig sein mag. Diese Platte bzw. die Basis 2 verfügt neben den Steckaufnahmen 5 und der die beiden Steckaufnahmen 5 miteinander verbindenden Aussparung 6 zusätzlich und erfindungsgemäß noch über eine weitere Aussparung 8. Die Aussparung 8 ist nach dem Ausführungsbeispiel als Rechteckaussparung 8 ausgebildet und mittig der Basis 2 vorgesehen. Außerdem erkennt man bei einem Vergleich der Fig. 1 und 5, dass die Rechteckaussparung 8 quer zur Längserstreckung der Seitenwände 3 in deren Transportrichtung, d. h. in gegenüber der Basis 2 verriegeltem Zustand, verläuft.

Auf diese Weise dient die Basis 2 in Verbindung mit der Aussparung 8 zur Aufnahme des jeweiligen Riegelelementes 4 einer oder mehrerer im Innern des Gitterwandgestells 3 sowie auf der Basis 2 in Lagerposition abgestellten Seitenwänden 3. Das kann man am besten anhand der perspektivischen Darstellung in der Fig. 1 im Vergleich zur Aufsicht auf die Basis 2 nach der Fig. 5 nachvollziehen. D. h., zwischen den beiden sich gegenüberliegenden und das Gitterwandgestell 3 definierenden Seitenwänden 3 ist ein Transportraum bzw. Transportvolumen vorgesehen, welches in der in Fig. 1 dargestellten Transportposition des erfindungsgemäßen Rollbehälters zur Aufnahme von beispielsweise Lebensmitteln in Gestalt von Gebinden dient und vorgesehen ist.

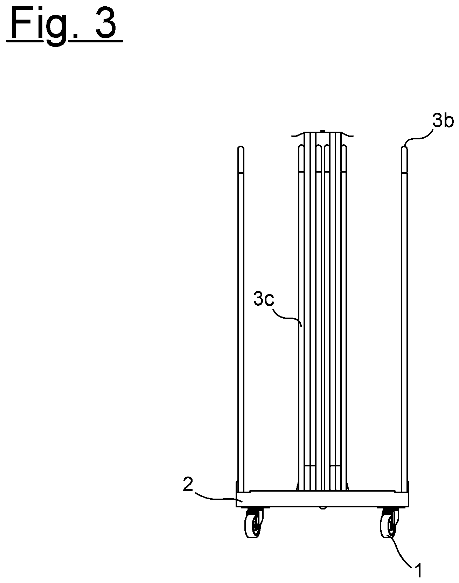

Zum Rücktransport der Rollbehälter kann dieses Transportvolumen aber auch genutzt werden, um im Innern des Gitterwandgestells 3 in Lagerposition, d. h. in zerlegtem Zustand, befindliche weitere Rollbehälter aufnehmen zu können. Das wird anhand der weiteren Figuren 2 bis 4 deutlich. Tatsächlich erkennt man, dass im Innern des Gitterwandgestells 3 mehrere Seitenwände 3 zerlegter Rollbehälter ebenso wie mehrere Basen 2 der betreffenden Rollbehälter aufgenommen werden können. Tatsächlich lassen sich im Innern des erfindungsgemäßen Rollbehälters insgesamt und nach dem Ausführungsbeispiel im Maximum vier zerlegte Rollbehälter aufnehmen und gegebenenfalls in leerem Zustand zu einem Logistikzentrum zurück transportieren.

Dazu verfügt die Basis 2 zusätzlich über eine oder mehrere Aufnahmen 9, die zur Steckaufnahme der auf der Basis 2 abgestellten Seitenwände 3 dienen. Tatsächlich lassen sich in die fraglichen und sich gegenüberliegenden Aufnahmen 9 jeweilige Eckpfosten 3c von Seitenwänden 3 der zerlegten Rollbehälter einstecken. Das ist selbstverständlich nicht zwingend, weil die im Innern des Gitterwandgestells 3 aufgenommenen Seitenwände 3 grundsätzlich auch kopfüber mit ihrer kopfseitigen bzw. oberen Querstange 3b auf der Basis 2 ablegen lassen.

Die Aufnahme 9 an der Basis 2 für die hier im aufgenommenen und in zerlegtem Zustand transportierten Seitenwände 3 sind sich gegenüberliegend an der Basis 2 vorgesehen und als jeweilige Steckaufnahmen für die Eckpfosten 3c der Seitenwände 3 ausgebildet. Außerdem ist die Auslegung meistens so getroffen, dass jeweils mittig der Basis 2 Steckaufnahmen bzw. Aufnahmen 9 vorgesehen sind, und zwar zur aneinander liegenden Steckaufnahme zweier Seitenwände 3 in ihrer Lagerposition. Das erkennt man anhand der beiden mittigen und unmittelbar aneinander liegenden Steckaufnahmen 9 der jeweils vier Steckaufnahmen 9 in der Fig. 5. Das gilt selbstverständlich nur beispielhaft und ist keinesfalls zwingend. Die in den Aufnahmen 9 aufgenommenen Seitenwände 3 nehmen dabei unverändert ihre Lagerposition ein, weil die zugehörigen Riegelelemente 4 hierbei in die Aussparung 8 eintauchen und nicht für eine zusätzliche Fixierung an der Basis 2 sorgen können.

In diesem Zusammenhang sollte betont werden, dass nach dem gezeigten Beispiel eine Aussparung 8 für die jeweils mittig der Seitenwand 3 platzierten Riegelelemente 4 in der Fig. 5 vorgesehen ist. Es kann selbstverständlich auch mit mehreren Riegelelementen 4 je Seitenwand 3 gearbeitet werden. Dann weist die Basis 2 entsprechend mehrere Aussparungen 8 auf. was allerdings nicht dargestellt ist.

Auf diese Weise kann der grundsätzlich in seiner Transportposition in der Fig. 1 dargestellte Rollbehälter mit wenigstens einer in Lagerposition im Innern des Gitterwandgestells 3 sowie auf der Basis 2 abgestellten Seitenwand 3 kombiniert werden. Meistens werden auf der Basis 2 nach der Darstellung in der Fig. 1 insgesamt acht Seitenwände 3 aufgenommen, die ausgehend von den beiden mittigen Seitenwänden 3 jeweils abwechselnd mit ihren Eckpfosten 3c in die betreffenden Aufnahmen 9 bzw. Steckaufnahmen der Basis 2 eingesteckt sind respektive umgekehrt mit ihrer kopfseitigen Querstange 3b auf der Basis 2 aufliegen. Seitlich neben den auf diese Weise im Innern des Gitterwandgestells 3 bevorrateten Seitenwänden 3 ist dann noch Platz für jeweils zwei Basen 2 der zerlegten Rollbehälter, wie man anhand der Fig. 4 nachvollziehen kann. Tatsächlich werden an dieser Stelle zwei übereinander angeordnete Basen 2 in dem verbleibenden Zwischenraum zwischen den Seitenwänden 3 der zerlegten Rollbehälter und den Seitenwänden 3 des in Transportposition befindlichen Rollbehälters aufgenommen. Das erkennt man am besten anhand der Aufsicht in der Fig. 4. Dabei sind die Seitenwände 3 parallel zu den das Gitterwandgestell 3 definierenden Seitenwänden 3 ausgerichtet. Gleiches gilt für die Basen 2 der jeweils zerlegten Rollbehälter.

Auf diese Weise wird das Packungsvolumen der erfindungsgemäßen Rollbehälter in zerlegtem Zustand bzw. in ihrer Lagerposition gegenüber dem Stand der Technik deutlich reduziert. Außerdem können auf diese Weise auch Rollbehälter aufgenommen und transportiert werden, die mit herkömmlichen Riegelelementen 4 wie dargestellt ausgerüstet sind. Denn die Riegelelemente 4 werden in der Aussparung respektive Rechteckaussparung 8 mittig der Basis 2 aufgenommen und finden hier Platz (vgl. Fig. 5). Damit die im Innern des Gitterwandgestells 3 aufgenommenen Seitenwände 3 ebenso wie die Basen 2 nicht über die Öffnung des Gitterwandgestells 3 herausfallen können, können zusätzlich ein oder mehrere angedeutete Spannmittel 10 an die betreffende Seitenwand 3 angeschlossen werden. Bei den Spannmitteln 10 kann es sich um Gummibänder, Kunststoffgurte oder Kombinationen handeln.

## Patentansprüche

1. Rollbehälter, insbesondere Rollcontainer, mit einer auf Rollen (1) gelagerten Basis (2), und mit einem in Transportposition auf der Basis (2) angeordneten und an diese lösbar angeschlossenen Gitterwandgestell (3) aus zumindest zwei sich gegenüberliegenden Seitenwänden (3), wobei die jeweilige Seitenwand (3) mithilfe zumindest eines fußseitigen, drehbar angelenkten Riegelelementes (4) lösbar an die Basis (2) angeschlossen ist,
**dadurch gekennzeichnet, dass**
die Basis (2) mit zumindest einer mittigen Aussparung (8) zur Aufnahme des jeweiligen Riegelelementes (4) einer oder mehrerer im Innern des Gitterwandgestells (3) sowie auf der Basis (2) in ihrer Lagerposition abgestellten Seitenwänden (3) ausgebildet ist.

2. Rollbehälter nach Anspruch 1, **dadurch gekennzeichnet, dass** das Riegelelement (4) an eine untere Querstange (3a) der Seitenwand (3) drehbar angeschlossen ist.

3. Rollbehälter nach Anspruch 1 oder 2, **dadurch gekennzeichnet, dass** das Riegelelement (4) als Lasche mit Gelenköse ausgebildet ist.

4. Rollbehälter nach einem der Ansprüche 1 bis 3, **dadurch gekennzeichnet, dass** das Riegelelement (4) die Basis (2) in der Transportposition zumindest teilweise untergreift.

5. Rollbehälter nach einem der Ansprüche 1 bis 4, **dadurch gekennzeichnet, dass** das Riegelelement (4) mit einem Betätigungsausleger (4c) ausgerüstet ist.

6. Rollbehälter nach einem der Ansprüche 1 bis 5, **dadurch gekennzeichnet, dass** die Basis (2) als Kunststoffboden mit gegebenenfalls zumindest einer eingelegten Verstärkungsschiene ausgebildet ist.

7. Rollbehälter nach einem der Ansprüche 1 bis 6, **dadurch gekennzeichnet, dass** die Aussparung (8) in der Basis (2) als Rechteckaussparung (8) ausgebildet ist.

8. Rollbehälter nach Anspruch 7, **dadurch gekennzeichnet, dass** die Rechteckaussparung (8) quer zur Längserstreckung der Seitenwände (3) in deren Transportposition verläuft.

9. Rollbehälter nach einem der Ansprüche 1 bis 8, **dadurch gekennzeichnet, dass** die Basis (2) eine oder mehrere Aufnahmen (9) für die auf der Basis abgestellten Seitenwände (3) aufweist.

10. Rollbehälter nach Anspruch 9, **dadurch gekennzeichnet, dass** die Aufnahmen (9) sich gegenüberliegend an der Basis (2) zur Steckaufnahme von Eckpfosten (3c) der Seitenwände (3) vorgesehen sind.

11. Rollbehälter nach Anspruch 10, **dadurch gekennzeichnet, dass** jeweils mittig der Basis (2) Aufnahmen (9) zur aneinander liegenden Steckaufnahme zweier Seitenwände (3) in deren Lagerposition vorgesehen sind.

12. Rollbehälter nach einem der Ansprüche 1 bis 11, **dadurch gekennzeichnet, dass** wenigstens eine Seitenwand (3) ein angeschlossenes Spannmittel (10) aufweist.

13. Kombination aus einem Rollbehälter nach einem der Ansprüche 1 bis 12 und wenigstens einer in Lagerposition im Innern des Gitterwandgestells (3) sowie auf der Basis (2) abgestellten Seitenwand (3).

14. Kombination nach Anspruch 13, **dadurch gekennzeichnet, dass** ausgehend von wenigstens einer vorzugsweise mittig in die Basis (2) eingesteckten Seitenwand (3) beidseitig auf der Basis (2) abgestellte Seitenwände (3) und gegebenenfalls Basen (2) von in Lagerposition befindlichen Rollbehältern im Innern des Gitterwandgestells (3) vorgesehen sind.

15. Kombination nach Anspruch 13 oder 14, **dadurch gekennzeichnet, dass** die auf der Basis (2) abgestellten Seitenwände (3) parallel zu den das Gitterwandgestell (3) definierenden Seitenwänden (3) ausgebildet sind.

## Claims

1. A roll container, in particular rolltainer, having a base (2), which is mounted on rollers (1), and having a grid wall frame (3), which is arranged on and detachably attached to the base (2) when in the transport position and consists of at least two mutually opposing side walls (3), wherein each side wall (3) is attached detachably to the base (2) with the aid of at least one rotatably hinged bolt element (4) at the foot end,
**characterised in that**
the base (2) is designed with at least one central cutout (8) for receiving the corresponding bolt element (4) of one or more side walls (3) set down in their storage position in the interior of the grid wall frame (3) and on the base (2).

2. The roll container according to Claim 1, **characterised in that** the bolt element (4) is attached rotatably to a lower cross bar (3a) of the side wall (3).

3. The roll container according to Claim 1 or 2, **characterised in that** the bolt element (4) is designed as a lug with a joint eyelet.

4. The roll container according to any one of Claims 1 to 3, **characterised in that** the bolt element (4) at least partially fits under the base (2) in the transport position.

5. The roll container according to any one of Claims 1 to 4, **characterised in that** the bolt element (4) is equipped with an actuation arm (4c).

6. The roll container according to any one of Claims 1 to 5, **characterised in that** the base (2) is designed as a plastic shelf with optionally at least one inlaid reinforcing rail.

7. The roll container according to any one of Claims 1 to 6, **characterised in that** the cutout (8) in the base (2) is designed as a rectangular cutout (8).

8. The roll container according to Claim 7, **characterised in that** the rectangular cutout (8) runs transversely to the longitudinal extent of the side walls (3) in their transport position.

9. The roll container according to any one of Claims 1 to 8, **characterised in that** the base (2) has one or more receptacles (9) for the side walls (3) set down on the base.

10. The roll container according to Claim 9, **characterised in that** the receptacles (9) are provided opposite one another on the base (2) for the insertion of corner poles (3c) of the side walls (3).

11. The roll container according to Claim 10, **characterised in that** receptacles (9) are provided in the centre of the base (2) for the insertion of two side walls (3) bearing against one another in their storage position.

12. The roll container according to any one of Claims 1 to 11, **characterised in that** at least one side wall (3) has an attached tensioning means (10).

13. A combination of a roll container according to any one of Claims 1 to 12 and at least one side wall (3) set down in the storage position in the interior of the grid wall frame (3) and on the base (2).

14. The combination according to Claim 13, **characterised in that**, starting from at least one side wall (3) inserted into the base (2) preferably centrally, side walls (3) and optionally bases (2) of roll containers in the storage position, which side walls and bases are set down on the base (2), are provided on both sides in the interior of the grid wall frame (3).

15. The combination according to Claim 13 or 14, **characterised in that** the side walls (3) set down on the base (2) are parallel to the side walls (3) defining the grid wall frame (3).

## Revendications

1. Contenant roulant, notamment conteneur roulant, pourvu d'une base (2) montée sur des roulettes (1) et pourvu d'un châssis (3) à parois grillagées, placé sur la base (2) en position de transport et raccordé sur celle-ci de manière amovible, constitué d'au moins deux parois latérales (3) qui se font face, la paroi latérale (3) respective étant raccordée à la base (2) à l'aide d'au moins un élément de verrouillage (4) côté bas, articulé de manière rotative,
**caractérisé en ce que**
la base (2) est conçue avec au moins un évidement (8) central, destiné à recevoir l'élément de verrouillage (4) respectif d'une ou de plusieurs parois latérales (3) posées à l'intérieur du châssis (3) à parois grillagées, ainsi que sur la base (2) dans leur position de stockage.

2. Contenant roulant selon la revendication 1, **caractérisé en ce que** l'élément de verrouillage (4) est raccordé de manière rotative sur une barre transversale (3a) inférieure de la paroi latérale (3).

3. Contenant roulant selon la revendication 1 ou 2, **caractérisé en ce que** l'élément de verrouillage (4) est conçu sous la forme d'une patte avec œillet d'articulation.

4. Contenant roulant selon l'une quelconque des revendications 1 à 3, **caractérisé en ce que** l'élément de verrouillage (4) s'accroche par le bas au moins en partie dans la base (2), dans la position de transport.

5. Contenant roulant selon l'une quelconque des revendications 1 à 4, **caractérisé en ce que** l'élément de verrouillage (4) est équipé d'un bras d'actionnement (4c).

6. Contenant roulant selon l'une quelconque des revendications 1 à 5, **caractérisé en ce que** la base (2) est conçue sous la forme d'un fond inférieur en matière plastique, pourvu le cas échéant d'au moins un rail de renfort inséré.

7. Contenant roulant selon l'une quelconque des revendications 1 à 6, **caractérisé en ce que** l'évidement (8) dans la base (2) est conçu sous la forme d'un évidement (8) rectangulaire.

8. Contenant roulant selon la revendication 7, **caractérisé en ce que** l'évidement (8) rectangulaire s'étend à la transversale de l'extension longitudinale des parois latérales (3), dans la position de transport de celles-ci.

9. Contenant roulant selon l'une quelconque des revendications 1 à 8, **caractérisé en ce que** la base (2) comporte un ou plusieurs logements (9) pour les parois latérales (3) posées sur la base.

10. Contenant roulant selon la revendication 9, **caractérisé en ce qu'**en se faisant face sur la base (2), les logements (9) sont prévus pour le logement par emboîtement de montants d'angle (3c) des parois latérales (3).

11. Contenant roulant selon la revendication 10, **caractérisé en ce que** respectivement au centre de la base (2), des logements (9) sont prévus pour le logement par emboîtement en appui l'une contre l'autre de deux parois latérales (3), dans la position de stockage de celles-ci.

12. Contenant roulant selon l'une quelconque des revendications 1 à 11, **caractérisé en ce qu'**au moins une paroi latérale (3) comporte un moyen de serrage (10) raccordé.

13. Association d'un contenant roulant selon l'une quelconque des revendications 1 à 12 et d'au moins une paroi latérale (3) posée en position de stockage à l'intérieur du châssis (3) à parois grillagées, ainsi que sur la base (2).

14. Association selon la revendication 13, **caractérisée en ce qu'**en partant d'au moins une paroi latérale (3), emboîtée de préférence au centre dans la base (2) sont prévues à l'intérieur du châssis (3) à parois grillagées des parois latérales (3) posées de part et d'autre sur la base (2) et le cas échéant des bases (2) de contenants roulants se trouvant dans la position de stockage.

15. Association selon la revendication 13 ou 14, **caractérisée en ce que** les parois latérales (3) posées sur la base (2) sont conçues à la parallèle des parois latérales (3) définissant le châssis (3) à parois grillagées.
